# DEMANDE DE BREVET EUROPEEN

(11) **EP 4 733 720 A1**
(43) Date de publication de la demande: **29.04.2026**
(21) Numéro de dépôt: 25211785.8
(22) Date de dépôt: 28.10.2025
(51) Int. Cl.: G01F 1/05, G01F 1/10, G01F 1/64, G01P 13/04

(54) **DISPOSITIF DE MESURE DE LA VITESSE D'ECOULEMENT D'UN FLUIDE, SYSTEME INTEGRANT AU MOINS UNE SONDE ELECTROCHIMIQUE ET LE DISPOSITIF DE MESURE APPLICATION AU SUIVI EN BIOPRODUCTION**

(30) Priorité: 28.10.2024 FR 2411763
(71) Demandeur: Commissariat à l'Energie Atomique et aux Energies Alternatives, 75015 Paris (FR)
(72) Inventeur: DELEVOYE, Elisabeth, 38054 Grenoble Cedex 09 (FR); CAROFF, Tristan, 38054 Grenoble Cedex 09 (FR); ELHORGA, Vincent, 38054 Grenoble Cedex 09 (FR)
(74) Mandataire: Ipsilon

(57) **Abrégé**

Dispositif de mesure de la vitesse d'écoulement d'un fluide, Système intégrant au moins une sonde électrochimique et le dispositif de mesure, notamment en extrémité libre d'une perche, Application au suivi en bioproduction.

L'invention concerne un dispositif (1) de mesure de la vitesse d'écoulement d'un fluide non gazeux, en particulier contenu dans un récipient, tel qu'une cuve, notamment à parois opaques, comprenant :
- un tube (2) d'axe longitudinal X;
- un élément (3) monté en rotation autour du tube et comprenant au moins une paroi avec une pluralité de trous débouchants (31 à 39) réalisée de telle sorte que la surface périphérique (300) de chaque trou est conformée de sorte qu'un écoulement du fluide sur la paroi provoque une asymétrie des efforts d'appui sur chaque surface périphérique de trou et mette ainsi l'élément en rotation autour de l'axe X ;
- un codeur rotatif (5) adapté pour mesurer la rotation de l'élément et par-là la vitesse d'écoulement du fluide..

## Description

### Domaine technique

La présente invention concerne le domaine de l'instrumentation de mesure de vitesse, plus particulièrement dédiée à la connaissance de l'état d'un fluide.

Elle vise notamment à apporter une solution fiable, précise et rapide de la mesure de la vitesse d'un fluide au sein d'un bioréacteur.

Bien que décrite en référence à cette application de mesure, l'invention peut être envisagée pour toute application de mesure de l'état d'un fluide (liquide, gaz) au sein d'un récipient tel qu'une cuve, plus particulièrement à parois opaques, dont les conditions d'utilisation mettent le fluide en mouvement global ou local. Il peut par exemple s'agir d'une cuve de production ou de décantation.

Dans le cas d'un fluide brassé au sein de la cuve, l'invention peut être mise à profit pour optimiser l'efficacité du brassage, notamment pour adapter la vitesse, la hauteur et/ou le type de turbine de brassage.

### Technique antérieure

Les réacteurs à cuve agitée, comme les bioréacteurs, sont largement utilisés dans de nombreux domaines de l'industrie chimique.

Dans le domaine de la bioproduction, la fabrication au sein de bioréacteurs de produits biologiques, qui sont des substances vivantes (vaccins, micro-algues, molécules pharmacologiques biologiques, etc...) ne peut pas être réalisée par un protocole complètement préétabli.

En effet, elle nécessite une adaptation permanente pour ajuster les paramètres physiques du fluide, tels que sa viscosité, sa vitesse de brassage, sa température, ainsi que sa teneur en bulles, en gaz, en nutriments, etc... à partir de paramètres mesurés imparfaits, qui consistent en des mesures biochimiques indirectes, comme le pH, et/ou valables uniquement localement et/ou incomplètes, etc....

L'étude de l'écoulement de fluide dans un bioréacteur est indispensable, afin d'apporter des informations clés pour le choix de la meilleure adaptation à apporter en temps réel. En particulier, la viscosité et, par corrélation, le nombre de Reynolds qui définit la nature d'un écoulement en fonction de sa vitesse et aussi de la viscosité du milieu qui s'écoule, est un paramètre qu'il est primordial de connaître.

Lorsque les cuves des réacteurs sont à parois transparentes, la mesure de la vitesse d'écoulement d'un fluide peut être obtenue par des moyens de mesure par observation indirecte effectuée depuis l'extérieur. Pour la mesure de vitesse, il peut s'agir principalement de deux méthodes optiques, à savoir l'anémométrie laser Doppler (acronyme anglo-saxon LDA pour « Laser Doppler Anemometry ») et la vélocimétrie par image de particules (acronyme anglo-saxon PIV pour « Particle Imaging Velocimetry).

Idéalement, des simulations numériques CFD (acronyme anglo-saxon pour « Computational Fluid Dynamics ») devraient être comparées à ces données expérimentales de champ d'écoulement ( « Flow Field» en anglo-saxon).

Or, bon nombre de bioréacteurs ont une cuve à parois opaques pour ne pas laisser pénétrer un flux lumineux ou pour des raisons de coût de l'équipement ou de robustesse. Dans le cas d'un fluide également opaque, tel que du kérosène, les gouttes ne sont pas transparentes et diffusent fortement la lumière. Cela écarte donc de facto les moyens de mesure indirects, précités.

En outre, il est généralement impossible ou interdit d'utiliser dans les bioréacteurs, des capsules de mesure se déplaçant librement au gré des mouvements permanents ou intermittents du fluide.

Il existe donc un besoin de trouver une solution de mesure fiable et précise de l'état de la vitesse d'écoulement d'un fluide non gazeux, au sein d'un bioréacteur, notamment à parois opaques.

De manière plus générale, il existe un besoin de trouver une solution de mesure fiable et précise, et rapide de l'écoulement d'un fluide non gazeux en mouvement ou non au sein d'un volume notamment d'une cuve, quelle qu'elle soit, notamment de décantation ou de production.

On rencontre une autre problématique dans les bioréacteurs, dans les milieux brassés plus généralement, qui sont équipés de sondes électrochimiques notamment sous la forme de capteurs électrochimiques qui fonctionnent en particulier par voltampérométrie, i.e. par des méthodes voltamétriques et/ou ampérométriques éventuellement combinées à d'autres méthodes exploitant l'impédance ou autres propriétés électrochimiques, pour mesurer différents paramètres. En effet, la stabilité de la mesure effectuée par ces sondes peut être perturbée par l'évolution de la nature de l'écoulement du fluide qui induit des dérives lentes non représentatives de phénomènes électrochimiques.

En outre, ces sondes peuvent s'encrasser si l'écoulement du fluide qui les atteint n'est pas suffisamment turbulent ou en cas d'apparition d'une couche qui les recouvre avec également comme conséquence une perturbation de la mesure effectuée.

Il existe donc également un besoin de trouver une solution pour garantir la stabilité de mesure des sondes électrochimiques immergées dans un fluide non gazeux en mouvement ou non au sein d'un volume notamment d'une cuve, quelle qu'elle soit, notamment de décantation ou de production.

Le but de l'invention est de répondre, au moins en partie, à ce(s) besoin(s).

### Exposé de l'invention

Pour ce faire, l'invention concerne un dispositif de mesure de la vitesse d'écoulement d'un fluide non gazeux, en particulier contenu dans un récipient, tel qu'une cuve, notamment à parois opaques, comprenant :
- un tube d'axe longitudinal X;
- un élément monté en rotation autour du tube et comprenant au moins une paroi avec une pluralité de trous débouchant réalisée de telle sorte que la surface périphérique de chaque trou est conformée de sorte qu'un écoulement du fluide sur la paroi provoque une asymétrie des efforts d'appui sur chaque surface périphérique de trou et mette ainsi l'élément en rotation autour de l'axe X ;
- un codeur rotatif adapté pour mesurer la rotation de l'élément et par-là la vitesse d'écoulement du fluide.

Selon un mode de réalisation avantageux, la paroi de l'élément est au moins en partie cylindrique, les trous étant réalisés dans l'épaisseur de la paroi cylindrique avec chacun un axe non sécant avec l'axe du cylindre de la paroi. Les trous sont ainsi en forme de goutte car leur contour résulte de l'intersection de deux cylindres dont les axes sont non sécants.

Les trous peuvent être distribués uniformément ou pas sur la périphérie.

Avantageusement, les trous sont répartis par rangées, de préférence au nombre de trois ou de six, parallèles à l'axe X, de préférence réparties uniformément angulairement autour de l'axe X, afin d'améliorer la régularité de la mise en rotation de l'élément.

Avantageusement encore, les trous sont de diamètres différents de sorte à élargir la gamme de nombre de Reynolds qui caractérise le fluide et qui est capable de produire la mise en rotation. En effet, des trous de dimensions différentes permettent d'adapter la mise en rotation du dispositif à différentes gammes de viscosité de fluide ou d'effets de turbulences.

L'élément peut comprendre une pluralité de protubérances agencées sur la face externe et/ou la face interne de l'élément, adaptées chacune pour créer une surface d'appui du fluide, avantageusement en complément des surfaces d'appui formées par la périphérie des trous dans la paroi de l'élément ou remplaçant ces dernières si le fluide est gazeux. Ces protubérances constituent une surface d'appui qui peuvent être associées aux surfaces périphériques qui sont les première surfaces d'appui. Cela permet d'augmenter l'efficacité de mise en rotation, lorsque le bilan des frottements ajoutés reste favorable.

L'élément est avantageusement monté en rotation autour du tube par au moins un palier ou un roulement à billes ou une cage à billes.

Selon un mode de réalisation avantageux, le codeur rotatif, dit tachymètre électrochimique, comprend :
- un capteur électrochimique, fixé à l'extrémité libre du tube à l'intérieur de l'élément, comprenant au moins une paire d'électrodes, dont une électrode dite de travail à laquelle un potentiel électrique appliqué (tension ou courant équivalent) peut être varié en fonction du temps et une électrode dite auxiliaire dans lequel le signal électrique qui circule, ainsi que dans l'électrode de travail, est mesuré en fonction du potentiel électrique;
- un moyen électrique ou hydraulique fixé à ou réalisé intégralement dans l'élément, adapté pour perturber le signal électrique mesuré par la au moins une paire d'électrodes, de sorte à pouvoir faire un décompte de chaque tour complet, effectué par l'élément autour du tube.

Autrement dit, selon ce mode le codeur rotatif a une double fonction, i.e. à la fois un tachymètre et un capteur électrochimique. Autrement dit encore, on peut le qualifier de tachymètre électrochimique.

Le moyen électrique peut être une baguette ou un fil électriquement conducteur ou en matériau ferromagnétique fixé ou réalisé intégralement sur la hauteur de l'élément tournant de façon à produire un champ électrique ou une réaction capacitive ou inductive ou électromagnétique détectable dans la mesure de courant qui est essentiellement résistive à la condition que cette composante électrique ne perturbe pas en permanence les mesures électrochimiques.

Par « mesure électrochimique » (« voltampérométrie » ou « voltammétrie » ou « impédance »), on entend ici et dans le cadre de l'invention une méthode d'électroanalyse basée sur la mesure du flux de courant électrique ou potentiel électrique résultant de la réduction ou de l'oxydation des composés tests présents en solution sous l'effet d'une variation contrôlée de la différence de potentiel entre deux électrodes spécifiques (« voltampérométrie »), ou de la réduction ou de l'oxydation des électrodes sous l'effet des composés présents en solution (« voltammétrie »), ou de la variation de la conductivité électrique du milieu en fonction des composés présents en solution (« impédance »).

Le moyen hydraulique peut être une protubérance ou une aspérité agencée sur la face interne de l'élément. Un tel moyen hydraulique permet de produire un tourbillon ou un début de tourbillon dans le fluide qui ne sera détecté dans une mesure électrochimique que pour des conditions particulières. La nature et la forme de la perturbation hydraulique ou électrique mesurée doit être suffisante pour qu'elle puisse être détectée et reconnue avec une précision temporelle qui peut être faible mais suffisante pour un décompte. La durée moyenne qui s'écoule entre un nombre suffisamment cumulé de décomptes fournit une estimation de la vitesse de rotation de l'élément tournant et donc de la vitesse d'écoulement du fluide qui appuie sur les surfaces périphériques des trous débouchant et la met en rotation, par des efforts tangentiels suffisamment augmentés. Avantageusement l'effet d'un effort radial est suffisamment minimisé ou rendu asymétrique par un ratio optimisé entre les surfaces perforées (trous débouchant) et la surface totale de l'élément avant perforation.

Avantageusement, indépendamment de la présence d'un moyen électrique ou hydraulique destiné à améliorer la précision temporelle de la détection de chaque tour complet, la forme précise de la perturbation induite par l'élément à trous qui tourne, est mesurée par une configuration adaptée du tachymètre électrochimique, et dans ce cas les fluctuations observées renseignent sur les turbulences du fluide autour de l'élément, ce qui se traduit par des fluctuations rapides du signal électrique superposées à la fluctuation plus lente rythmée par les tours complets, les deux pouvant être perçues par l'électrode de détection.

L'invention a encore pour objet un système de mesure électrochimique et de vitesse d'écoulement d'un fluide non gazeux, en particulier contenu dans un récipient, tel qu'une cuve, notamment à parois opaques comprenant :
- une perche de mesure formant le tube, dont une extrémité libre est destinée à être immergée dans le fluide ;
- au moins une sonde électrochimique, fixée à l'extrémité libre de la perche de mesure, et adaptée pour mesurer des propriétés électrochimiques du fluide ;
- un dispositif de mesure tel que décrit précédemment dont l'élément est monté en rotation autour de la sonde électrochimique qui fait office également du codeur rotatif (compte-tour).

Par « sonde électrochimique », on entend ici et dans le cadre de l'invention, un dispositif comprenant au moins un capteur électrochimique capable de convertir une ou plusieurs grandeurs chimiques, comme la concentration, le pH, l'activité électrochimique, en grandeurs électriques en sortie avec une sensibilité variable selon les voies et doté de relations qui permettent un étalonnage. Ce dispositif peut être mono-électrode ou multi-électrodes, et réalisé sur un PCB (« Printed Card Board ») ou tout équivalent de capteur intégré. La sonde peut comporter une capsule à paroi mince et fragile, e.g. en verre, ou une surface nue ou fonctionnalisée, au contact direct du fluide.

Avantageusement, le capteur électrochimique du dispositif est celui de la sonde électrochimique.

L'invention a encore pour objet un procédé de fonctionnement du système de mesure tel que décrit précédemment, comprenant les étapes consistant à :
i/ réaliser des mesures électrochimiques au moyen de la sonde électrochimique pour le suivi de propriétés électrochimiques du fluide ;
ii/ au cours de ou après l'étape i/, appliquer sur l'électrode de travail des stimuli de potentiel électrique, situés en dehors des zones utiles de la courbe caractéristique de densité de courant en fonction du potentiel de la sonde, et détecter la mesure de courant, de potentiel ou d'impédance perturbée par le moyen électrique ou hydraulique du codeur rotatif pendant l'application des stimuli de potentiel, et en déduire la mesure de vitesse d'écoulement du fluide.

L'invention a encore pour objet un milieu ou cuve de décantation, d'épuration, ou de production, notamment d'un bioréacteur, comprenant un dispositif de mesure tel que décrit précédemment ou d'un système tel que décrit précédemment. Une cuve peut être n'importe quel type de récipient, réservoir, bioréacteur, conteneur, bouilleur, contenant un fluide. Un bioréacteur comprend une cuve utilisée pour la fabrication de médicaments, de produits pharmaceutiques, d'anticorps, de vaccins, ou autres produits que l'on peut qualifier de vivant.

L'invention a enfin pour objet l'utilisation d'un dispositif de mesure tel que décrit précédemment ou d'un système tel que décrit précédemment pour le suivi d'une bioproduction et/ou pour l'apport de données de références dans un jumeau numérique.

Une cuve peut être équipée d'un ou plusieurs tubes par exemple pour mettre en place des moyens de brassage du fluide, ou un moyen pour introduire des nutriments ou un gaz, ou toutes autres fonctions. En général, les perches sont fixes mais certaines peuvent être mobiles en rotation ou en translation et actionnées par des moteurs. Une perche peut être équipée d'une ou plusieurs sondes de mesure, notamment une sonde capable de réaliser des mesures électrochimiques.

L'invention se propose d'utiliser l'une quelconque de ces types de perches pour réaliser les mesures selon l'invention, dénommée dans ce but, perche de mesure.

Une perche de mesure peut être constituée d'un tube plein ou tube creux au moins partiellement immergé dans un fluide à analyser, et peut être fixe ou mobile en translation et/ou en rotation.

De manière plus générale, l'invention peut être mise en œuvre dans certaines productions agroalimentaires et/ou pour des applications pour lesquelles on recherche une protection et une amélioration des performances des sondes électrochimiques déjà installées, notamment des sondes fixes immergées dans des cuves à l'intérieur desquelles le milieu fluidique est susceptible d'avoir des effets néfastes soit par ses propriétés d'écoulement, soit par encrassement (« biofouling »), soit par l'apparition d'un biofilm ou d'une couche de surface qui altère la qualité des mesures. Il peut s'agir de bassins de pisciculture ou dits naturels.

L'invention peut encore être mise en œuvre dans des milieux fluidiques actuellement non instrumentés ou sous-instrumentés du fait de leur nature, comme une turbidité trop élevée, des remous ou turbulences trop importants, des dépôts trop rapides d'une couche impropre à une mesure électrochimique. Il peut s'agir de bacs de décantation, notamment des eaux usées, de microstations d'épuration pour les particuliers.

L'invention consiste donc essentiellement en un dispositif de mesure qui peut s'apparenter à un anémomètre pour un fluide non gazeux, dont la surface périphérique d'un élément monté en rotation, rendue asymétrique par des trous débouchant permet à l'écoulement de fluide de réaliser une poussée asymétrique qui permet de faire tourner l'élément et donc grâce au codeur rotatif de connaître la vitesse d'écoulement du fluide.

La paroi périphérique perforée de l'élément tournant crée des surfaces d'appui suffisamment larges et asymétriques pour produire un couple autour de l'axe du tube.

Autrement exprimé, l'élément tournant du dispositif de mesure peut être assimilé à une roue à aubes, avec une mise en rotation passive, totalement immergée dans le milieu fluidique non gazeux avec des faces d'appui définies par la paroi périphérique perforée qui sont très compactes, incluses dans l'épaisseur de l'élément pour être adaptées à une rotation dans un fluide non gazeux. Contrairement à un anémomètre classique, les faces d'appui ne sont pas en surépaisseur bombée comme celles de coupelles mais sont constituées des surfaces périphériques créées par les perforations de la paroi. Le ratio de la surface périphérique sur la surface totale de l'élément tournant est avantageusement le plus élevé possible pour faciliter la mise en rotation en minimisant les frottements et pour minimiser la perturbation de l'écoulement introduit par la présence de l'élément tournant. On veille bien entendu à préserver la rigidité mécanique de l'élément de rotation.

Une variante avantageuse pour créer de plus grandes surfaces périphériques asymétriques du point de vue de l'écoulement d'un fluide autour de l'élément percé est de réaliser les trous, soit par usinage soit par fabrication additive, selon une direction de perforation qui n'est pas dirigée vers l'axe de symétrie de l'élément tournant. Ce faisant on favorise le cumul des efforts tangentiels produits par la part de fluide s'écoulant d'un côté ou de l'autre de la surface cylindrique de l'élément tournant provoquant une mise en mouvement à la vitesse du fluide par la génération d'un couple de rotation. Par « surface d'appui », on entend la somme cumulée de toutes les surfaces périphériques des trous percés qui contribuent au couple de rotation. La surface d'appui effective découle de la surface d'appui géométrique légèrement corrigée d'un coefficient qui dépend des conditions d'écoulement du fluide et peut être calibré. Le diamètre de l'élément tournant est choisi pour maximiser le couple de rotation selon les règles connues de l'homme de l'art. La bonne capacité du fluide à passer par les trous débouchant augmente les efforts produits sur la surface d'appui. En cas de régime turbulent des trous plus nombreux et plus petits sont préférables afin de sommer les contributions utiles et de minimiser les efforts produits par les orientations internes aux turbulences qui ne sont pas dirigées dans la direction de l'écoulement global et ne contribuent donc pas au couple de rotation.

De fait, pour minimiser l'équilibre des deux appuis qui sont de nature radiale et antagoniste créés par l'écoulement qui se scinde en deux autour de l'élément de rotation, de préférence des rangées de trous débouchant sont créées en son sein. Dans certains cas particuliers, une rupture de symétrie de l'élément peut suffire à engendrer un couple de rotation correspondant à un petit effort tangentiel produit à partir du déséquilibre entre les efforts radiaux et obtenir une petite mise en rotation qui peut parfois être régulière voire stable.

Mais pour le fonctionnement du dispositif soit garanti, plus particulièrement dans beaucoup de configurations d'usage et de fluides et de gammes de nombre de Reynolds, corrélé à la viscosité, il faut réaliser une partition du liquide en deux contributions autour de l'élément de rotation de sorte que le liquide pénètre dans des trous à la fois bien organisés et bien réalisés tels que le cumul des efforts du fluide sur les surface périphériques des trous soit de nature tangentielle et maximisée pour augmenter le couple de rotation dans le sens choisi et le minimiser pour l'autre sens.

C'est pour cette raison que selon cette variante avantageuse, les axes des trous ne sont pas sécants avec l'axe longitudinal X du tube. En effet, avec un axe des trous sécants avec l'axe X on obtient un couple de rotation moins bien optimisé avec une rotation résultante qui pourrait être peu régulière voire dans certaines situations de fluides turbulents pourrait passer aléatoirement d'un sens de rotation à l'autre sens de rotation.

Par conséquent, l'épaisseur de la paroi de l'élément de rotation et le nombre, la taille, l'angle de perçage, et la répartition de la pluralité de trous sont des paramètres à ajuster de manière précise.

Avantageusement, l'élément forme une bague de protection d'une sonde électrochimique et on obtient ainsi un système de mesure combiné de vitesse d'écoulement d'un fluide et de connaissance des propriétés chimiques de ce dernier.

En intégrant l'élément tournant du dispositif de mesure d'écoulement de vitesse autour d'une sonde électrochimique, on minimise en outre les effets néfastes liés à l'évolution lente de la nature de l'écoulement, comme des microcirculations très localisées de fluide autour de la sonde, qui peuvent engendrer des dérives lentes de la mesure de la sonde, non représentatives de phénomènes électrochimiques. Sans limite de généralité, cet avantage est notamment lié aux conditions d'écoulement très lents ou aux effets de trainées permanentes induites par la présence de la sonde dans un écoulement lent ou très peu turbulent. De plus, l'élément tournant perforé non seulement facilite le renouvellement du contact entre la sonde électrochimique et le milieu fluidique non gazeux dans lequel elle est immergée, mais garantit un régime d'écoulement propice pour améliorer la stabilité de la mesure effectuée par la sonde électrochimique.

La surface périphérique de l'élément tournant du dispositif de mesure peut être avantageusement structurée, notamment au moyen de rainures et/ou d'aspérités, ou fonctionnalisées, notamment par un revêtement hydrophile ou hydrophobe pour améliorer le fonctionnement du dispositif, selon des méthodes connues de l'homme de l'art. On peut ainsi obtenir une variation plus linéaire de la vitesse de l'élément tournant selon les différents régimes d'écoulement caractérisés par le nombre de Reynolds ou une uniformisation plus efficace de l'écoulement fluidique en contact avec la sonde électrochimique.

Un mode de réalisation avantageux de l'invention consiste à utiliser le capteur de la sonde électrochimique et mettre à profit son fonctionnement en cyclage voltampérométrique pour mettre en œuvre le codeur rotatif (tachymètre électrochimique).

En effet, selon ce mode, le fonctionnement consiste à utiliser des instants à l'intérieur d'un protocole de cyclage répétitif de la sonde pour intercaler des conditions dédiées pour la fonction de codeur rotatif, c'est-à-dire des stimuli de potentiel électrique, sans perturber la fonction première de mesure de voltampérométrie cyclique de la sonde électrochimique. Ces stimuli de potentiel électrique sont intercalés en dehors des segments (temporels) qui fournissent les points et les pentes caractéristiques de la courbe dite en « canard » de densité de courant en fonction du potentiel. Selon le milieu fluidique et les conditions mises en oeuvre pour réaliser l'écoulement de fluide, ces stimuli de potentiel électrique sont activés à chaque répétition par le moyen de perturbation du signal qui est réalisé dans l'élément tournant, dans un cycle d'acquisition ou uniquement après une acquisition de la courbe-canard et avant de relancer l'acquisition suivante afin de ne pas perturber les réactions redox en jeu au cours de l'acquisition d'une courbe-canard ou après une succession d'acquisition de cette courbe-canard. Les instants intercalés des stimuli de potentiel peuvent constituer une sous-partie du motif répété d'une courbe-canard ou être intercalés entre des motifs de répétition dédiés à la mesure électrochimique de la sonde.

Autrement exprimé, le codeur rotatif nécessaire à la connaissance de la vitesse de rotation de l'élément tournant peut être mis en œuvre avec uniquement les électrodes de la sonde électrochimique et son fonctionnement peut être intercalé temporellement dans le fonctionnement cyclique voltampérométrique de la sonde.

L'électrode dédiée à l'acquisition du signal électrique produit par le moyen de perturbation hydraulique ou électrique fixé ou réalisé intégralement dans l'élément tournant et actif à chaque passage peut éventuellement être une électrode (ou un groupe d'électrodes) indépendante, en sus de la sonde électrochimique. Cela peut permettre d'avoir un protocole de mesure plus simple à mettre en œuvre, à optimiser et à gérer. Une électrode indépendante est avantageuse notamment si un stimuli de potentiel électrique est répété cycliquement pendant l'acquisition de la courbe-canard afin d'éviter tout parasitage de la mesure voltampérométrique principale ou tout ajout d'une contribution assimilable à un bruit.

L'invention fournit ainsi une mesure fiable de la vitesse d'écoulement d'un fluide. Elle peut être couplée au système de mesure tel que décrit et revendiqué dans la demande de brevet déposée le 8 janvier 2024 sous le numéro FR2400143 et intitulée «*Palier de guidage à plusieurs points de mesure de pression, Système de mesure de la viscosité ou du nombre de Reynolds d'un fluide, à perche guidée par le palier, Application au suivi en bioproduction* » , pour obtenir une estimation du nombre de Reynolds et de la viscosité du milieu fluidique.

Pour l'analyse proprement dite des données de mesure, une méthode d'analyse de la forme du profil électrique de perturbation qui est compressée ou dilatée dans le temps selon la vitesse de rotation peut être mise en œuvre. La durée entre deux signatures de signal, raccourcie ou allongée correspond à des vitesses de rotation de l'élément tournant, accélérée ou ralentie, respectivement, et donc à des vitesses d'écoulement du fluide accélérée ou ralentie, respectivement, éventuellement après application d'au moins une correction de calibration.

On peut aussi mettre en œuvre une méthode d'intelligence artificielle, par classification pour déterminer et discriminer les différentes vitesses dans les données mesurées. Des classes créées peuvent être réalisées en fonction principalement de gammes de vitesse d'écoulement. On peut créer des clusters pour déterminer la nature de l'écoulement ou estimer la viscosité locale du fluide sans déterminer la vitesse exacte (au sens métrologique) de l'écoulement.

En corollaire de l'analyse des données mesurées par le dispositif de mesure selon l'invention on peut piloter de manière dynamique, en temps réel, c'est-à-dire pendant l'exécution d'un processus industriel qui utilise un fluide, le choix entre plusieurs paramétrages ou plusieurs configurations d'un système de régulation des conditions du fluide, par exemple d'un système de contrôle-commande agissant par exemple sur une turbine de brassage ou d'un système de bullage. Cela peut intervenir notamment en raison d'une variation importante de la vitesse d'écoulement, ou de la viscosité du fluide ou d'un manque d'oxygénation.

Ce pilotage dynamique peut être mis en œuvre au moyen d'un jumeau numérique. En fonction des variables d'environnement, et des informations directement mesurées ou fournies par la méthode de classification selon les données de mesure de vitesse selon l'invention, le jumeau numérique peut effectuer de nouvelles simulations. Ces simulations peuvent être réalisées par exemple par éléments finis. Le jumeau numérique peut aussi changer de modèle de calcul, obtenu à l'avance, par exemple par la réduction de l'ordre des modèles (MOR acronyme anglo-saxon pour « Model Order Reduction ») qui est une technique permettant de réduire la complexité de calcul des modèles mathématiques dans les simulations numériques. Les informations fournies par l'invention peuvent induire une évolution des paramètres d'un modèle MOR ou son remplacement par un autre modèle MOR obtenu pour une autre classe, par exemple une autre gamme du nombre de Reynolds.

Au final, l'invention apporte plusieurs avantages, parmi lesquels on peut citer :
- une estimation fiable de la vitesse de l'écoulement d'un fluide, avantageusement autour d'une sonde électrochimique qui en mesure ses propriétés électrochimiques, permettant de lever une inconnue sur l'estimation de la viscosité localisée ou momentanée du fluide, l'autre inconnue étant pression induite par le même fluide au même endroit et adressée dans la demande de brevet déposée le 8 janvier 2024 sous le numéro FR2400143 ;
- une estimation plus fine de l'impact de la physique de l'écoulement sur la qualité des mesures électrochimiques avant leur calibration, et/ou sur la justesse ou la stabilité à court, moyen ou long terme de la part de la calibration qui est liée aux évolutions potentielles des propriétés de l'écoulement du fluide. Cela permet de lever de potentielles ambiguïtés d'analyse des dynamiques électrochimiques à partir des résultats mesurés par la sonde.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique en perspective de la mise en œuvre au bout d'une perche d'un premier exemple d'un dispositif de mesure de la vitesse d'écoulement d'un fluide non gazeux, selon l'invention.
[Fig 2] la figure 2 est une vue de côté du système selon la figure 1.
[Fig 3] la figure 3 est une vue schématique de face d'une ébauche à plat d'un élément de rotation selon le premier exemple des figures 1 et 2., réalisée par une fabrication additive à plat avant d'être finalisée.
[Fig 4] la figure 4 illustre le positionnement d'outil de perçage pour réaliser un élément de rotation selon l'exemple des figures 1 et 2.
[Fig 5] la figure 5 est une vue en perspective d'un deuxième exemple d'un dispositif de mesure de la vitesse d'écoulement d'un fluide non gazeux, selon l'invention.
[Fig 6] la figure 6 est une vue de côté du système selon la figure 5.
[Fig 7] la figure 7 est une vue en coupe longitudinale partielle du système selon la figure 5.
[Fig 8] la figure 8 est une vue schématique en perspective d'un troisième exemple d'un dispositif de mesure de la vitesse d'écoulement d'un fluide non gazeux, selon l'invention.
[Fig 9] la figure 9 est un voltamogramme cyclique c'est-à-dire une courbe dite canard de la densité de courant en fonction du potentiel, caractéristique d'une détection par voltampérométrie cyclique d'une espèce oxydée libre de diffuser en solution telle qu'elle est mise en œuvre par une sonde électrochimique d'un système capable de mesurer à la fois la vitesse d'écoulement d'un fluide et ses propriétés électrochimiques selon l'invention.

### Description détaillée

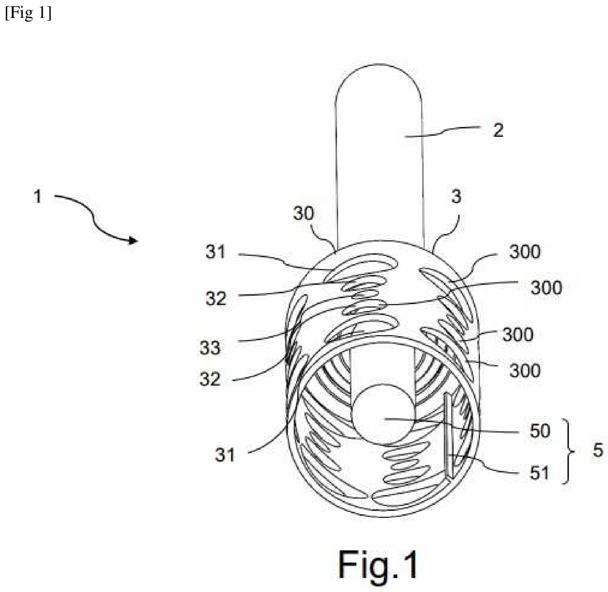

Par souci de clarté, les mêmes références désignant les mêmes éléments selon l'invention sont utilisées pour toutes les figures 1 à 8.

Les dessins et l'agencement des différents éléments entre eux ne sont pas représentés à l'échelle.

Dans l'ensemble de la présente demande, les termes « dessus », « dessous», « inférieur » et « supérieur » sont à comprendre par référence au système de mesure selon l'invention tel qu'il est dans une configuration d'installation avec une perche de mesure agencée à la verticale.

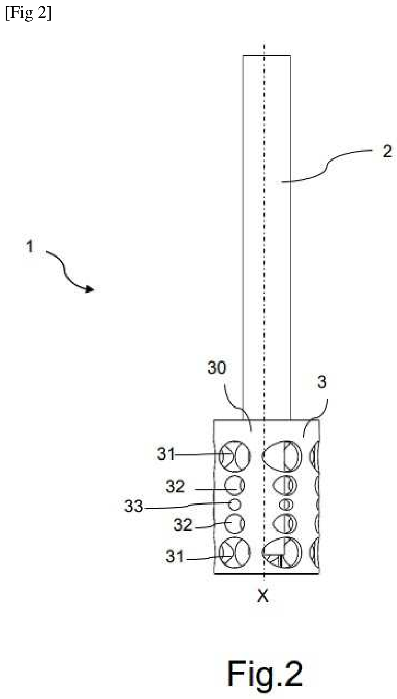

On a illustré aux figures 1 et 2 un premier exemple de dispositif de mesure 1 de la vitesse d'écoulement d'un fluide non gazeux contenu dans un récipient, tel qu'une cuve, notamment à parois opaques. Il peut s'agir de la cuve d'un bioréacteur contenant un fluide de bioproduction dont on cherche à connaître et maitriser les conditions de brassage.

Le dispositif 1 comprend tout d'abord un tube 2 d'axe longitudinal X formant une perche de mesure.

Un élément 3, monté en rotation autour du tube 2, comprend au moins une paroi 30 avec une pluralité de trous débouchant 31, 32, 33 réalisée de telle sorte que la surface périphérique 300 de chaque trou est conformée de sorte qu'un écoulement du fluide sur la paroi provoque une asymétrie des efforts d'appui sur chaque surface périphérique de trou et mette ainsi l'élément 3 en rotation autour de l'axe X.

Autrement dit, la surface de la paroi 30 est rendue mécaniquement asymétrique autour de l'axe X c'est-à-dire qu'elle peut facilement être sujette à un couple de rotation autour de l'axe X et avec la caractéristique préférée que les trous sont réalisés comme des petits cylindres creux dans l'épaisseur de la paroi cylindrique avec pour chaque petit cylindre un axe non sécant avec l'axe X.

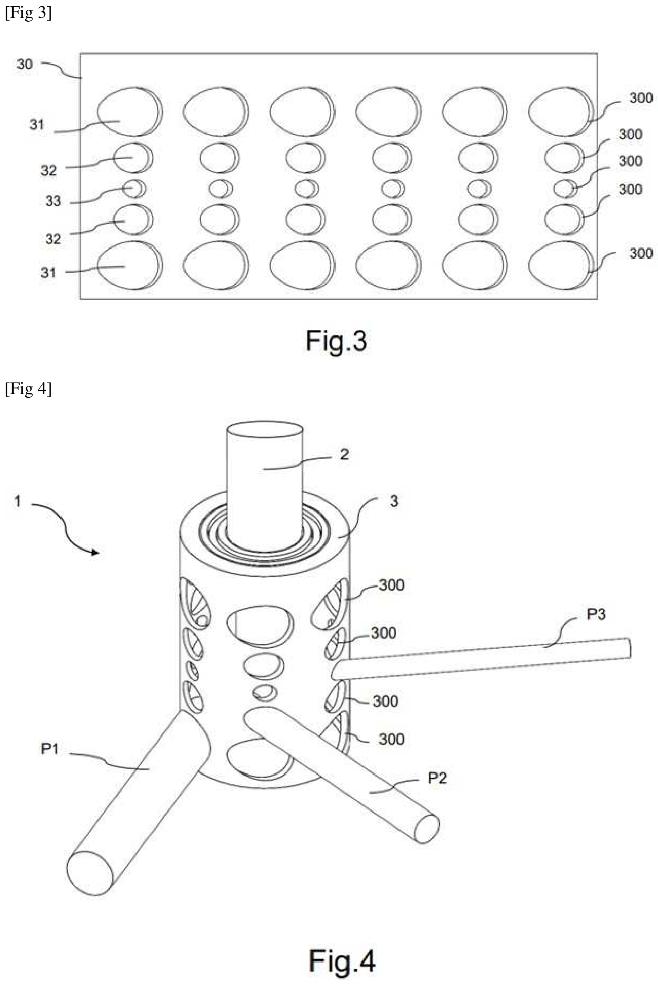

Un exemple de réalisation d'une ébauche 3 d'un élément de rotation réalisé à plat par fabrication additive est montré à la figure 3. Pour finaliser l'élément de rotation 3, cette ébauche est roulée sur elle-même puis scellée au niveau de ses deux bords jointifs. L'ébauche 3 peut être réalisée en plusieurs sous-parties avec assemblage des bords jointifs successifs.

La figure 4 matérialise la présence d'outils de perçage P1, P2, P3 qui s'étendent chacun selon un axe non sécant avec l'axe central X du tube 2 de sorte à réaliser respectivement les trous 31, 32, 33 à surface périphérique asymétrique.

Du fait de l'asymétrie de chaque surface périphérique 300 de trou, un écoulement du fluide sur la paroi 30 provoque sur les surfaces périphériques des trous des efforts d'appui tels qu'il résulte globalement un couple de rotation et met ainsi l'élément 3 en rotation autour de l'axe X.

Dans l'exemple illustré, l'élément 3 est sous la forme d'une bague cylindrique, les trous 31 à 33 étant réalisés dans l'épaisseur de la paroi cylindrique avec chacun un axe non sécant avec l'axe X du cylindre. Le diamètre de la bague et l'épaisseur de sa paroi sont choisis pour maximiser ce couple selon les règles connues de l'homme de l'art et par-dessus ce premier dimensionnement, les trous débouchant sont adaptés à l'usage visé.

Cet élément 3 peut être monté en rotation sur la perche de mesure 2 par l'intermédiaire d'une cage à billes 4 qui peut être intégrée directement à l'élément 3 ou intercalé entre elle et la perche 2.

Comme visible sur ces figures 1 et 2, les trous 31 à 33 sont de diamètres différents par exemple avec les plus gros 31 sur les portions d'extrémité inférieure et supérieures, les trous 32 de diamètre intermédiaire à l'intérieur de la paroi 30 et de part et d'autre un trou 33 de plus petit diamètre. L'agencement de ces trous 31 à 33 peut être symétrique par rapport au plan médian de la hauteur de la bague cylindrique 3. Comme montré également, ces trous 31 à 33 sont agencées en rangées régulièrement espacées les unes des autres d'un angle de 60° autour de l'axe X. Le fait d'avoir des diamètres différents de trous 31 à 33 permet d'élargir la gamme de nombres de Reynolds qui caractérise le fluide permettant de mettre la bague 3 en rotation autour de l'axe X.

Le dispositif 1 comprend enfin un codeur rotatif 5, 50 adapté pour mesurer la rotation de l'élément et par-là la vitesse d'écoulement du fluide.

Selon un mode de réalisation avantageux, le codeur 5 comprend un capteur voltampérométrique 50 fixé à ou dépassant de l'extrémité libre du tube 2 à l'intérieur de l'élément tournant 3. Ce capteur électrochimique 50 comprenant une paire d'électrodes, dont une électrode dite de travail à laquelle un potentiel électrique appliqué peut être varié en fonction du temps et une électrode dite auxiliaire dans lequel le signal électrique qui circule, ainsi que dans l'électrode de travail, est mesuré en fonction du potentiel électrique.

Un moyen électrique ou hydraulique 51 fixé à ou réalisé intégralement dans l'élément, permet de perturber le signal électrique mesuré par la paire d'électrodes, de sorte à pouvoir faire un décompte de chaque tour effectué par l'élément autour du tube. On peut ainsi mesurer la vitesse de rotation de l'élément tournant 3 et par-là la vitesse d'écoulement d'un fluide sur ce dernier.

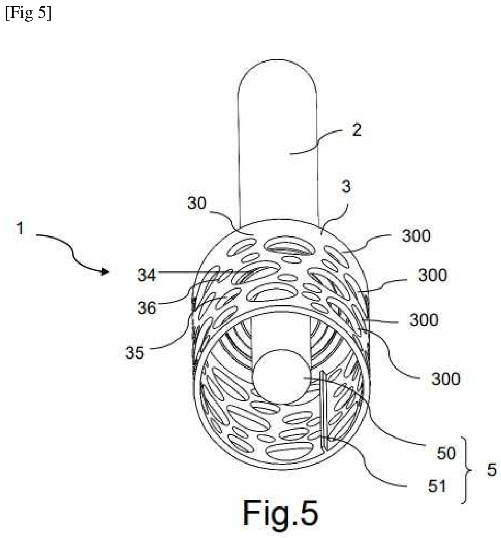

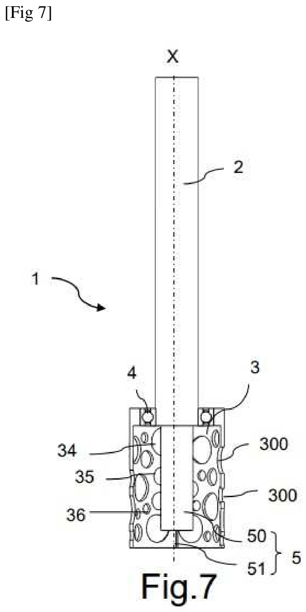

Comme illustré sur la figure 7, un moyen de perturbation hydraulique 51 peut prendre la forme d'une nervure 51 agencée sur la face interne de la bague tournante 3, sur tout ou partie de la hauteur de celle-ci. Comme illustré sur les figures 1 et 5, l'élément 51 peut être saillant.

L'exemple de dispositif 1 selon les figures 5 et 7 se distingue de celui des figures 1 et 2 par des trous 34 à 36 de plus gros à plus petit diamètre respectivement qui sont réalisés avec un agencement aléatoire dans la paroi périphérique 30 de la bague tournante 3.

Avantageusement, la structure des éléments 3 et 51 assure un montage/démontage facile pour, notamment, des remplacements ou nettoyages si besoin.

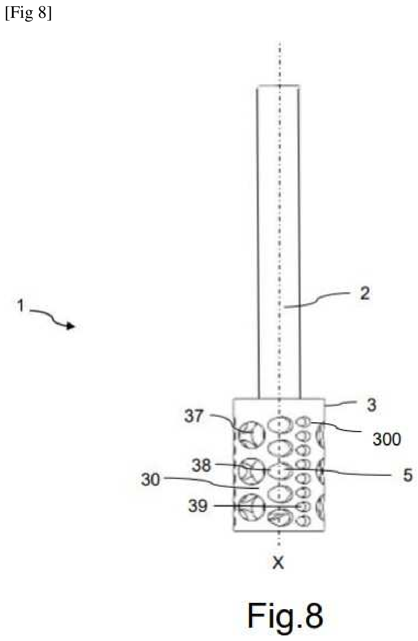

La figure 8 illustre un autre exemple de dispositif 1 avec des rangées verticales de même diamètres de trous 37 à 39, du plus gros au plus petit respectivement, agencées les unes adjacentes aux autres, également en étant distantes angulairement les unes des autres de 60°.

Le capteur voltampérométrique 50 est avantageusement celui d'une sonde électrochimique qui permet de mesurer les propriétés électrochimiques du fluide. Le dispositif 1 devient alors un système combiné de mesure de vitesse d'écoulement du fluide et de ses propriétés électrochimiques. Autrement dit, le codeur rotatif 5 joue le rôle à la fois d'un tachymètre et d'un capteur électrochimique. On peut ainsi le qualifier de tachymètre électrochimique.

Selon un mode de réalisation avantageux, l'invention met en œuvre un fonctionnement qui permet, à l'aide uniquement des électrodes de la sonde électrochimique, de faire la mesure de vitesse d'écoulement du fluide.

On décrit maintenant ce fonctionnement avantageux.

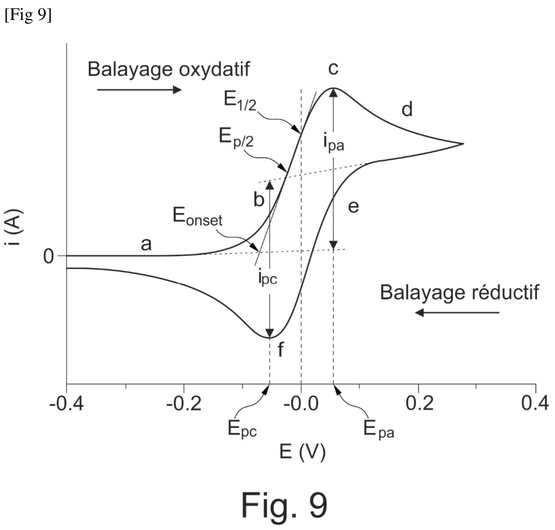

La figure 9 illustre un exemple de voltamogramme cyclique pour un processus redox réversible électrochimiquement obtenu avec des électrodes de la sonde 5. L'illustration présente les points clé et les portions de la courbe caractéristique dite canard utiles pour analyser les propriétés, avec des valeurs uniquement indicatives.

Le balayage commence à -0,4 V et avance vers des potentiels oxydatifs plus positifs. Initialement, le potentiel n'est pas suffisant pour oxyder l'analyte (a). Lorsque le potentiel s'approche de plusieurs kT du potentiel standard, le début (Eonset) de l'oxydation est atteint. Suite à cela, le courant augmente de façon exponentielle (b) à mesure que l'analyte commence son oxydation à la surface de l'électrode de travail. Pour un processus réversible, le courant augmente initialement comme s'il n'y avait pas de changement dans la concentration de l'oxydant. Le courant est dicté par la vitesse de diffusion de l'oxydant vers l'électrode, ainsi que par la proportion convertie en forme réduite. Cela peut être compris selon l'équation de Nernst. Au fur et à mesure que l'analyse se poursuit, davantage d'oxydant s'épuise. Le gradient de concentration s'y adapte. C'est ce changement qui provoque un pic dans le voltammogramme.

On constate que la diminution du courant due à l'épuisement de l'oxydant l'emporte sur l'augmentation due à la modification de la proportion d'oxydant oxydé au niveau de l'électrode. Le courant atteint son maximum au point c (courant de pointe anodique (ipa) pour l'oxydation au potentiel de pointe anodique (Epa). Ici, des potentiels plus positifs provoquent une augmentation du courant qui est compensée par une diminution du flux d'analyte à partir de distances de plus en plus grandes. de la surface de l'électrode.

À partir de ce point, le courant est limité par le transport massif de l'analyte depuis la masse jusqu'à l'interface DDL, ce qui est lent sur l'échelle de temps électrochimique. Cela se traduit par une diminution du courant (d), à mesure que les potentiels sont balayés de manière plus positive. Cela se produit jusqu'à ce qu'un état stable soit atteint, où de nouvelles augmentations de potentiel n'ont plus d'effet. L'inversion du balayage vers des potentiels négatifs (balayage réducteur) continue d'oxyder l'analyte. Cela continue jusqu'à ce que le potentiel appliqué atteigne la valeur à laquelle l'analyte oxydé (qui s'est accumulé à la surface de l'électrode) peut être re-réduit (e). Le processus de réduction reflète celui de l'oxydation. La seule différence est que cela se produit avec une direction de balayage opposée et un pic cathodique (ipc) au potentiel de pic cathodique (Epc) (f). Les courants de crête anodique et cathodique doivent être de même amplitude mais de signe opposé. Ceci est uniquement à condition que le processus soit réversible (et si le pic cathodique est mesuré par rapport à la ligne de base après le pic anodique)

C'est donc l'effet des deux balayages du potentiel électrique qui permettent d'analyser un équilibre chimique dit « redox ».

Selon l'invention, pour détecter les signaux électriques des perturbations engendrées par le moyen 51, on ajoute des stimuli de potentiels électriques dans des segments temporels non utilisés pour l'interprétation des propriétés de la réaction redox, c'est-à-dire hors des segments qui fournissent les points et les pentes caractéristiques de la courbe canard.

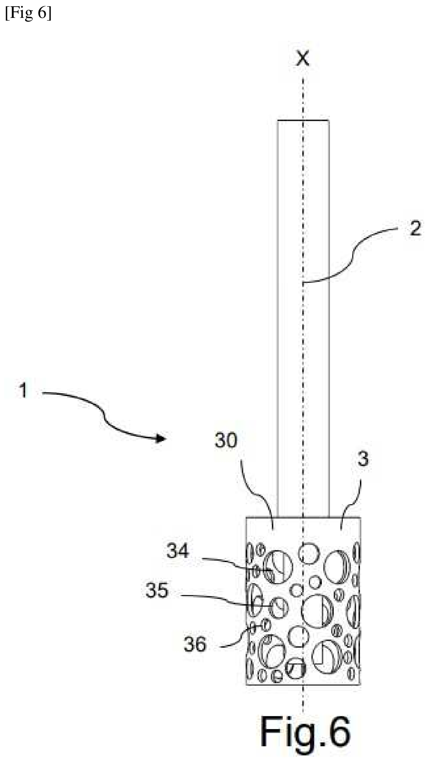

En particulier, avec l'exemple de la figure 6, les stimuli de potentiel électrique peuvent être incrémentés dans la zone plate aux tensions négatives comprises entre -0,4V et -0,3V. Il est possible d'utiliser des tensions plus faibles par exemple réduites de -0,1V par rapport à la valeur minimale utile. Les stimulis appliqués seront de préférences des créneaux rectangulaires appliqués pendant une durée compatible avec le décompte de au moins un tour.

De préférence, lorsque c'est possible, des créneaux sont appliqués en continus pendant le cyclage. Les créneaux doivent être suffisants en amplitude et caractéristiques temporelles (durée et répétition) pour détecter le passage du moyen 51, qui est suffisamment faible pour ne pas perturber les analyses de la courbe-canard. Cela implique que des modifications mineures ou des faibles fluctuations ajoutées sur la courbe-canard sont acceptables tant que l'extraction des propriétés chimiques est préservée.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans les exemples illustrés, les trous sont de section circulaire ou elliptique on peut très bien envisager n'importe quelle forme de trous débouchant, comme des sections triangulaire, carrée, rectangulaire, etc.

Si dans les exemples illustrés, les trous sont agencés en rangées réparties régulièrement à 60° les unes des autres, d'autres variantes peuvent être envisagées comme des agencements par paire, par trois rangées à 120° les unes des autres, etc. et/ou une répartition non régulière autour de l'axe X.

De manière plus générale, la capacité du fluide à passer par les trous au lieu d'être simplement dévié par la paroi de l'élément tournant augmente les efforts produits sur les faces d'appui définies par ces parois périphériques. En cas de régime turbulent des trous plus nombreux et plus petits sont préférables afin de sommer les contributions utiles et de minimiser les efforts produits par les orientations internes aux turbulences qui ne sont pas dirigées dans la direction de l'écoulement global.

L'élément tournant et les trous sont prévus pour minimiser les importantes forces de frottement, de sorte que la vitesse angulaire soit acquise avec des efforts très faibles afin d'être directement liée à l'écoulement libre du fluide non confiné. Lorsque les forces de frottement le permettent, si elles sont suffisamment faibles, on peut envisager d'augmenter la surface des parois périphériques au moyen de protubérances agencées du côté de la face externe et/ou de la face interne de l'élément tournant.

L'électrode dédiée à l'acquisition du signal électrique produit par le moyen de perturbation 51 et actif à chaque passage peut éventuellement être une électrode indépendante, ou en sus des électrodes de la sonde électrochimique 5. Une électrode indépendante est avantageuse notamment si le stimuli est répété cycliquement pendant l'acquisition de la courbe-canard afin d'éviter tout parasitage ou tout ajout d'une contribution assimilable à du bruit.

Bien que la méthode avantageuse décrite soit la voltampérométrie, le nombre et le choix des électrodes que ce soit celles de mesure du courant ou celles appliquant la tension est libre.

## Revendications

1. Dispositif (1) de mesure de la vitesse d'écoulement d'un fluide non gazeux, en particulier contenu dans un récipient, tel qu'une cuve, notamment à parois opaques, comprenant :
- un tube (2) d'axe longitudinal X;
- un élément (3) monté en rotation autour du tube et comprenant au moins une paroi avec une pluralité de trous débouchants (31 à 39) réalisée de telle sorte que la surface périphérique (300) de chaque trou est conformée de sorte qu'un écoulement du fluide sur la paroi provoque une asymétrie des efforts d'appui sur chaque surface périphérique de trou et mette ainsi l'élément en rotation autour de l'axe X ;
- un codeur rotatif (5) adapté pour mesurer la rotation de l'élément et par-là la vitesse d'écoulement du fluide.

2. Dispositif de mesure selon la revendication 1, la paroi de l'élément (3) étant au moins en partie cylindrique, les trous étant réalisés dans l'épaisseur de la paroi cylindrique avec chacun un axe non sécant avec l'axe du cylindre de la paroi.

3. Dispositif de mesure selon la revendication 2, les trous étant distribués uniformément ou pas sur la périphérie.

4. Dispositif de mesure selon la revendication 2 ou 3, les trous étant répartis par rangées, de préférence au nombre de trois ou de six, parallèles à l'axe X, de préférence réparties uniformément angulairement autour de l'axe X.

5. Dispositif de mesure selon l'une revendications 2 à 4, les trous étant de diamètres différents de sorte à élargir la gamme de nombre de Reynolds qui caractérise le fluide.

6. Dispositif de mesure selon l'une des revendications précédentes, l'élément comprenant une pluralité de protubérances agencées sur la face externe et/ou la face interne de l'élément, adaptées chacune pour créer une surface d'appui du fluide.

7. Dispositif de mesure selon l'une des revendications précédentes, l'élément étant monté en rotation autour du tube par au moins un palier ou un roulement à billes ou une cage à billes (4).

8. Dispositif de mesure selon l'une des revendications précédentes, le codeur rotatif (5), dit tachymètre électrochimique, comprenant :
- un capteur électrochimique (50), fixé à l'extrémité libre du tube à l'intérieur de l'élément, comprenant au moins une paire d'électrodes, dont une électrode dite de travail à laquelle un potentiel électrique appliqué peut être varié en fonction du temps et une électrode dite auxiliaire dans lequel le signal électrique qui circule, ainsi que dans l'électrode de travail, est mesuré en fonction du potentiel électrique ;
- un moyen (51) électrique ou hydraulique fixé à ou réalisé intégralement dans l'élément, adapté pour perturber le signal électrique mesuré par au moins une paire d'électrodes, de sorte à pouvoir faire un décompte de chaque tour complet, effectué par l'élément autour du tube.

9. Dispositif de mesure selon la revendication 8, le moyen hydraulique étant une protubérance ou une aspérité agencée sur la face interne de l'élément.

10. Système de mesure électrochimique et de vitesse d'écoulement d'un fluide non gazeux , en particulier contenu dans un récipient, tel qu'une cuve, notamment à parois opaques comprenant :
- une perche de mesure formant le tube, dont une extrémité libre est destinée à être immergée dans le fluide ;
- au moins une sonde électrochimique, fixée à l'extrémité libre de la perche de mesure, et adaptée pour mesurer des propriétés électrochimiques du fluide ;
- un dispositif de mesure selon l'une des revendications précédentes, l'élément du dispositif étant monté en rotation autour de la sonde électrochimique qui fait office également de codeur rotatif.

11. Système de mesure selon la revendication 10, le dispositif de mesure étant selon la revendication 8 ou 9, le capteur électrochimique du dispositif étant la sonde électrochimique.

12. Procédé de fonctionnement du système de mesure selon l'une des revendications 10 ou 11, le dispositif de mesure étant selon la revendication 8 ou 9, comprenant les étapes consistant à :
i/ réaliser des mesures électrochimiques au moyen de la sonde électrochimique pour le suivi de propriétés électrochimiques du fluide;
ii/ au cours de ou après l'étape i/, appliquer sur l'électrode de travail des stimuli de potentiel électrique, situés en dehors des zones utiles de la courbe caractéristique de densité de courant en fonction du potentiel de la sonde, et détecter la mesure de courant, de potentiel ou d'impédance perturbée par le moyen électrique ou hydraulique du codeur rotatif pendant l'application des stimuli de potentiel, et en déduire la mesure de vitesse d'écoulement du fluide.

13. Milieu ou cuve de décantation, d'épuration, ou de production, notamment d'un bioréacteur, comprenant un dispositif de mesure selon l'une des revendications 1 à 9 ou d'un système selon l'une des revendications 10 à 11.

14. Utilisation d'un dispositif de mesure selon l'une des revendications 1 à 9 ou d'un système selon l'une des revendications 10 à 11 pour le suivi d'une bioproduction et/ou pour l'apport de données de références dans un jumeau numérique.
